# EUROPÄISCHE PATENTANMELDUNG

(11) **EP 4 094 574 A1**
(43) Veröffentlichungstag der Anmeldung: **30.11.2022**
(21) Anmeldenummer: 22173656.4
(22) Anmeldetag: 17.05.2022
(51) Int. Cl.: A01J 25/13

(54) **PRESSDECKEL**

(30) Priorität: 27.05.2021 CH 5992021; 28.10.2021 CH 0704642021
(71) Anmelder: Kalt Maschinenbau AG, 9604 Lütisburg (CH)
(72) Erfinder: Müller, Marcel, 9500 Wil (CH); Rüegg, Samuel, 9604 Lütisburg (CH)
(74) Vertreter: Frommhold, Joachim

(57) **Zusammenfassung**

Die Erfindung betrifft einen Pressdeckel, der mit einer Käseform korrespondiert, insbesondere einer Käseform, die in einer Kassettenpresse oder dergleichen angeordnet ist.

Er soll einfach aufgebaut sein, einem Pressdruck standhalten und auch hohen hygienischen Anforderungen genügen.

Dies ist dadurch gelöst, dass der Pressdeckel (1, 10) eine einwandige Lochplatte in Form eines Lochblechs (2) aufweist, das mit einer Vielzahl Lochungen (4) versehen ist, und das einen geraden Rand oder einen umlaufenden, gebogenen Rand (3) umfasst.

## Beschreibung

Die Erfindung betrifft einen Pressdeckel, der mit einer Käseform korrespondiert, insbesondere einer Käseform, die in einer Kassettenpresse oder dergleichen angeordnet ist.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismus' für die Formen. Verteilkopf wie Wendemechanismus müssen dabei manuell bereitgestellt resp. gewechselt werden. Die Wandung der Form besteht aus einem Lochblech und mehrere Formen können in Sätzen angeordnet sein. An den Endflächen eines Satzes sind zylindrische Zapfen zum andocken einer Handhabungseinrichtung vorgesehen.

Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen.

Die eigentliche Pressform ist dabei von einem topfförmigen Mantel mit einem Luftzufuhrkanal umgeben (EP-B-1269832). Dadurch wird ein Luftkanal gebildet und durch die zugeführte Luft kann die an den Sieblöchern des Lochblechs der Form anhaftende Käsemasse nach dem Pressen von der Jerbseite gelöst werden.

Nach der EP-B-543185 ist ein Form- bzw. Pressdeckel über eine Kippeinrichtung mit dem Pressstempel verbindbar (selbstzentrierend), so dass infolge möglicher Kippbewegungen ein Ansaugen des Formdeckels an der Käsemasse vermieden wird. Die Form selbst ist rund oder viereckig und kann aus einem äusseren Behälter und einem inneren, gelochten Mantel bestehen.

Die BR 9300409 offenbart eine Form mit doppelter Wandung, die mit an ihrem Boden kreuzenden Rippen versehen ist. Diese Rippen dienen jedoch lediglich als Anschlag eines Bodenblechs und sind als versteifende Elemente ungeeignet und auch nicht dafür vorgesehen.

In der US 3838955A ist eine Form zur Herstellung von Cheddar offenbart, die eine Form und einen Pressdeckel aufweist. Die Form und insbesondere der Pressdeckel sind massiv ausgeführt. Der Pressdeckel sowie der Boden der Form sind mit wenigen Löchern 5 zum Abfluss von Molke versehen. Der Pressdeckel ist plattenartig aufgebaut und besteht aus PP oder PE. Er ist mit einem erhöhten, massiven Flansch versehen, der Ösen zur Aufhängung aufweist. Der plattenartige Pressdeckel ist mit einer zweiten, der Form zugewandten, wesentlich dünneren Lochplatte zur Entsirtung der Käsemasse versehen.

Zur Erreichung der erforderlichen Formstabilität beim Abpressen von Molke weisen solche plattenartigen Pressdeckel aus Kunststoff eine Dicke von ca. 10mm auf.

Eine weitere Käseform mit einer perforierten Formwand aus Metall ist in der DE-B-1030612 offenbart. Diese Formwand weist an ihrer inneren Oberfläche gleichmässig verteilte, niedrige Erhöhungen und Vertiefungen bis ca.1 mm auf, die die Käserinde bei Entnahme des Käselaibs nicht beschädigen sollen, selbst wenn der Käse aus der Form geschlagen wird. Eine solche Käseform mit perforierter Wandung kann nach DE-C-2823182 auch aus Kunststoff bestehen, an deren Innenseite zueinander parallele Riefen mit dreieckigem Querschnitt vorgesehen sind. Im Übergangs- und einteiligen Bodenbereich sind die Riefen durch Rippen mit Unterbrechungen getrennt. Derartige Formwände oder Doppelböden sind aufwändig in der Reinigung.

In der EP 2710889 A1 ist ein Pressdeckel offenbart, der aus einem Lochblech mit einer, darauf befindlichen, versteifenden Rippenstruktur aus einem rostfreien Stahl gebildet ist. Die Rippenstruktur ist an dünnen Stegen unlösbar mit dem Lochblech verbunden, insbesondere verschweisst.

Einen weiteren Pressdeckel aus einem Kunststoff zeigt die EP 3501269 B1. Pressdeckel umfasst im Wesentlichen eine einteilige Lochplatte aus einem Kunststoff, deren Querschnitt dem inneren Querschnitt einer Käseform, mit der der Pressdeckel bei üblicher Verwendung korrespondiert, entspricht, mit daran angeformter Rippenstruktur, die dem Pressdeckel die notwendige Formstabilität und Steifigkeit verleiht.

Der Pressdeckel ist einstückig hergestellt, zum Beispiel durch ausfräsen aus einer Platte oder im 3D-Druck.

Dieser Pressdeckel ermöglicht einen guten Molkeabfluss, ist aber durch die Verrippung vergleichsweise teuer in der Herstellung und aufwändig zu reinigen.

Der Erfindung liegt die Aufgabe zugrunde, einen Pressdeckel, der mit einer Käseform korrespondiert und der zur Anordnung am Presskopf einer Kassettenpresse oder dergleichen geeignet ist, zu entwickeln, der einfach aufgebaut ist, einem Pressdruck standhält und auch hohen hygienischen Anforderungen genügt.

Die Aufgabe ist mit den Merkmalen des Patentanspruchs 1 gelöst.

Ein erfindungsgemässer Pressdeckel umfasst im Wesentlichen eine einwandige Lochplatte, deren Querschnitt dem inneren Querschnitt einer Käseform, mit der der Pressdeckel bei üblicher Verwendung korrespondiert, entspricht. Die Lochplatte ist ein Lochblech aus Metall, insbesondere Stahl und weist eine Vielzahl von Lochungen für den Abfluss abgepresster Molke auf. Das Lochblech umfasst weiterhin einen umlaufenden, gebogenen Rand, der in Pressrichtung gebogen ist. Der Rand verleiht dem Pressdeckel eine hohe Formstabilität und Steifigkeit. Ebenso kann das Lochblech mit einem geraden Rand versehen sein.

Das Lochblech des Pressdeckels ist einstückig hergestellt, zum Beispiel durch Tiefziehen.

Der erfindungsgemässe Pressdeckel ermöglicht einerseits einen guten Molkeabfluss und ist andererseits leicht und vollständig von beiden Seiten her reinigbar.

Der Pressdeckel bietet eine hohe Lebensmittelsicherheit und Hygiene und ist einfach reinigbar. Absplitterungen, wie sie bei Kunststoff möglich sind, treten nicht auf.

Er weist eine hohe Lebensdauer auf, ist formstabil, steif, und ist automatisiert und prozesssicher sowie kostengünstig herstellbar.

Bevorzugte Ausgestaltungen sind in den abhängigen Ansprüchen offenbart.

Das Lochblech des Pressdeckels ist mit einer Lochung versehen, ausgenommen die Bereiche um Haken, die auf der vom Rand abgewandten Seite des Lochblechs angeordnet sind. Bevorzugt sind es drei Haken, die entlang eines Pressrings gleichmässig beabstandet voneinander angeordnet sind. Die Haken dienen der Aufnahme des Pressdeckels an einem Presskopf einer Käsepresse und sie haben zudem eine Führungsfunktion. Sie leiten den Pressrahmen auf die Lochblechoberfläche. Der Pressdruck wird dort auf die auszupressende Käserohmasse übertragen.

Der Lochdurchmesser der Lochung beträgt vorzugsweise 0,6-1,2mm. Kleinere Lochdurchmesser sind weniger gut reinigbar. Die einzelnen Löcher sind mit einem Abstand von einigen Millimetern, bevorzugt 2-3mm, voneinander angeordnet.

Die Lochung ist bevorzugt in Form von zylindrischen, konischen oder gestuften Bohrungen ausgeführt.

Der erfindungsgemässe Pressdeckel kann mit beliebigem Querschnitt ausgeführt sein, insbesondere einen runden oder viereckigen Querschnitt aufweisen. Möglich wären aber auch Sonderformen, wie zum Beispiel ein herzförmiger Querschnitt.

Eine solche Formgebung, Materialwahl und Herstellungsweise ergibt sich nicht naheliegend aus dem Stand der Technik.

Eine Käseform weist einen Boden und Seitenwände auf, wobei der Boden und die Seitenwände im Wesentlichen aus dem vorbeschriebenen Lochblech gebildet sind und dass die Käseform rund bzw. zylindrisch oder mehreckig ist.

Bevorzugt sind mindestens zwei mehreckige, bevorzugt viereckige Käseformen als eine Kassette zusammengefasst angeordnet, wobei die Käseformen mittels eines Deckblechs und bodennah angeordneter Querrippen verbunden sind. Zur Versteifung weist die so gebildete Kassette weiterhin Längsrippen am Boden und/oder Mantelrippen im Bereich der äusseren Seitenwände auf, die jeweils bevorzugt parallel zueinander angeordnet sind.

Die Erfindung wird nachfolgend in einem Ausführungsbeispiel näher beschrieben. In der Zeichnung zeigen die
Fig. 1: einen erfindungsgemässen Pressdeckel rund;
Fig. 2: den Pressdeckel nach Fig. 1 in Teilansicht;
Fig. 3: den Pressdeckel nach Fig. 1 in Draufsicht;
Fig. 4: einen Pressdeckel in anderer Ausführungsform;
Fig. 5: den Pressdeckel nach Fig. 4 in Teilansicht;
Fig. 6: den erfindungsgemässen Pressdeckel viereckig;
Fig. 7: eine rechteckige Käseform;
Fig. 8: die Käseform nach Fig. 7 in anderer Ansicht und
Fig. 9: ein erfindungsgemässes Lochblech.

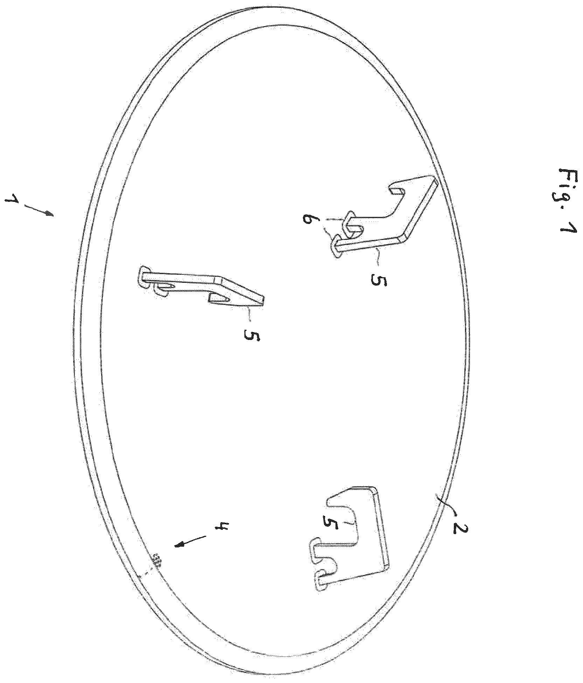

Ein erfindungsgemässer Pressdeckel 1 (Fig. 1), im Beispiel für eine runde Käseform (nicht dargestellt), umfasst ein einwandiges, kreisrundes Lochblech 2, das in seinem Querschnitt dem inneren Querschnitt der Käseform entspricht (ebenfalls kreisrund). Das Lochblech 2 ist zumindest auf der, der Pressrichtung zugewandten Seite poliert.

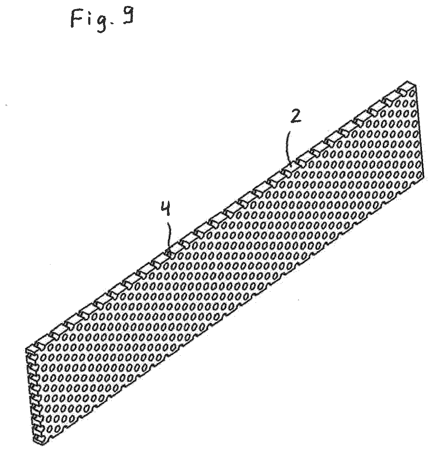

Das Lochblech 2 weist eine Vielzahl von Lochungen 4 (Fig. 9) und im Beispiel einen umlaufenden, gebogenen Rand 3 von zum Beispiel 10mm Höhe h und einem Radius r von ca. 8mm auf.

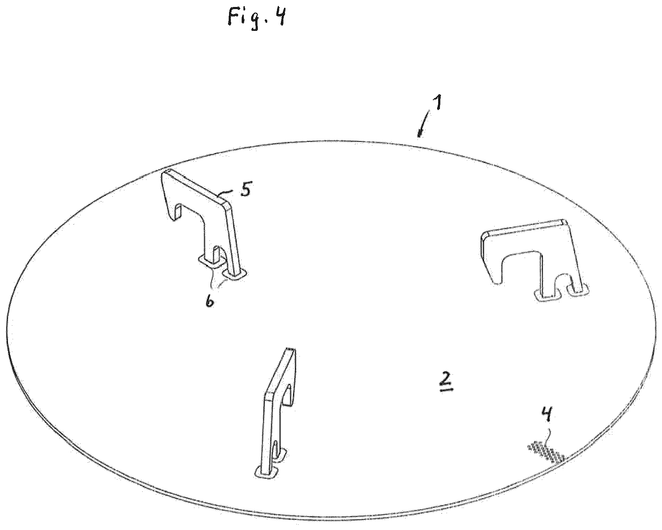

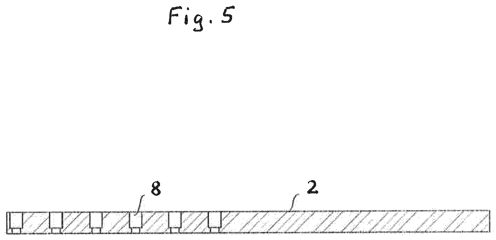

Der Rand 3 ist in Pressrichtung 9 gebogen und beim Abpressen von Molke dicht an der Innenwand der Käseform anliegend. Ebenso kann das Lochblech 2 in anderer Ausführungsform mit einem geraden Rand versehen sein (Fig. 4 und 5).

Ein solches Lochblech 2 ist kostengünstig mittels Tiefziehen herstellbar.

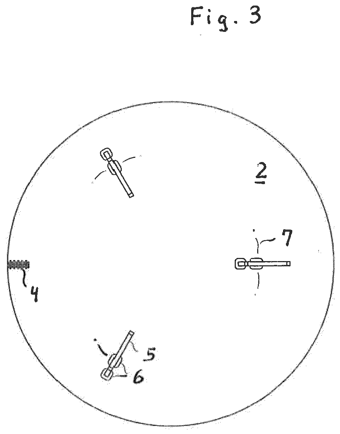

Am Lochblech 2 sind, bei runder Ausbildung des Pressdeckels 1, an der, von der Pressrichtung bzw. der Käseform abgewandten Seite drei Haken 5 entlang eines (virtuellen) Pressrings 7 gleichmässig beabstandet voneinander angeordnet (Fig. 1, 3).

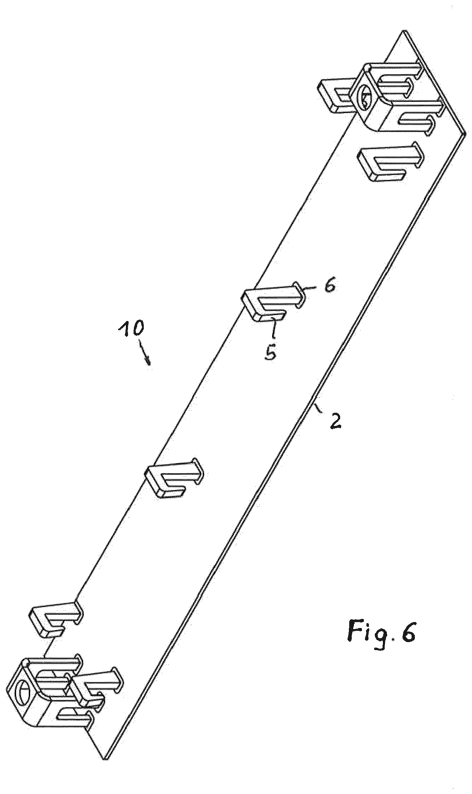

Bei einem viereckigen Pressdeckel 10 (Fig. 6) sind die Haken 5 im Beispiel sowohl mittig entlang einer Längsachse des Pressdeckels 10 als auch, nahe der Schmalseiten, links und rechts neben der Längsachse angeordnet.

Die Haken 5 dienen in bekannter Weise der Aufnahme des Pressdeckels 1 an einem Presskopf einer Käsepresse und leiten den Pressrahmen auf die Lochblechoberfläche.

Ein Bereich 6 um die Haken 5 ist lochfrei.

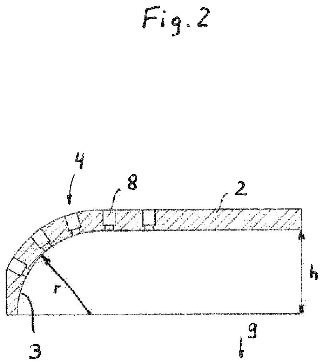

Die Lochungen 4 sind im Beispiel als gestuften Bohrungen 8 ausgeführt (Fig. 2, 9). Der grössere Lochdurchmesser beträgt im Beispiel vorzugsweise 1,2mm und der kleinere Lochdurchmesser 0,8mm. Kleinere Lochdurchmesser sind weniger gut reinigbar. Die einzelnen Bohrungen 8 sind mit einem Abstand von einigen Millimetern, bevorzugt 2-3mm, voneinander angeordnet.

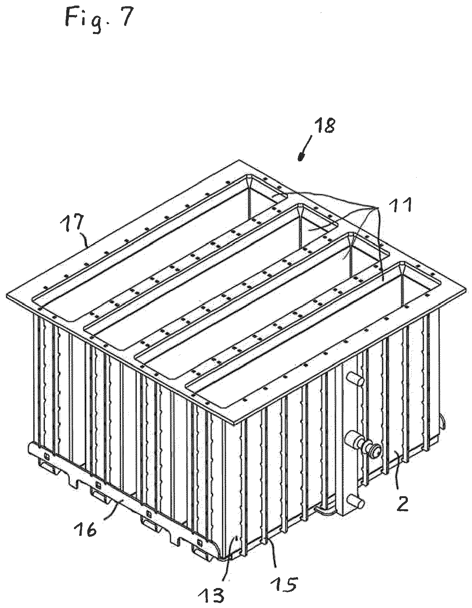

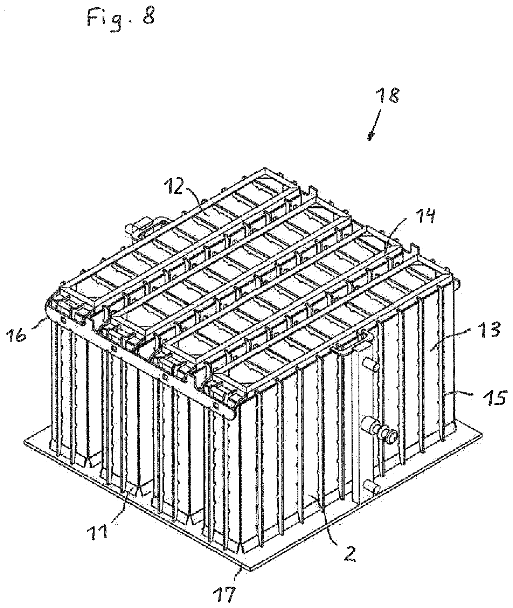

Die Fig. 7 und 8 zeigen eine viereckige, quaderförmige Käseform 11, die einen Boden 12 und Seitenwände 13 aufweist, wobei der Boden 12 und die Seitenwände 13 aus dem vorbeschriebenen Lochblech 2 gebildet sind.

Im Beispiel sind zudem vier dieser Käseformen 11 zusammen als eine Kassette 18 angeordnet, wobei die Käseformen 11 mittels eines Deckblechs 17 und bodennah angeordneter Querrippen 16 verbunden sind. Die Querrippen 16 sind im Beispiel an zwei parallel zueinander stehenden äusseren Seitenwänden angeordnet. Die so gebildete Kassette 18 weist weiterhin zur Versteifung Längsrippen 14 am Boden und Mantelrippen 15 im Bereich der Seitenwände auf, die jeweils parallel zueinander angeordnet sind.

Eine weitere runde Käseform in einer Käsepresse, mit der der erfindungsgemässe Pressdeckel 1 korrespondiert, ist zum Beispiel in der EP 2845469 A1 der Anmelderin offenbart. Er umfasst einen zylindrischen Mantel mit einem oberen Korb und einen Boden.

Für hoch zu pressenden Käse, d. h. Hartkäse, besteht die Mantelwand und auch der Boden aus Lochblech.

Bei der Abpressung von Weichkäse oder Halbhartkäse kann hingegen eine konventionelle Lochung ausreichend sein.

### Bezugszeichenliste

- 1: Pressdeckel
- 2: Lochblech
- 3: Rand
- 4: Lochung
- 5: Haken
- 6: Bereich
- 7: Pressring
- 8: Bohrung
- 9: Pressrichtung
- 10: Pressdeckel
- 11: Käseform
- 12: Boden
- 13: Seitenwand
- 14: Längsrippe
- 15: Mantelrippe
- 16: Querrippe
- 17: Deckblech
- 18: Kassette
- h: Höhe
- r: Radius

## Patentansprüche

1. Pressdeckel einer Käseform, wobei der Pressdeckel (1) in seinem Querschnitt dem inneren Querschnitt der Käseform entspricht und eine einwandige Lochplatte aufweist, die mit einer Vielzahl Lochungen (4) versehen ist, **dadurch gekennzeichnet, dass** die Lochplatte ein Lochblech (2) aus Metall ist und einen geraden Rand oder einen umlaufenden, gebogenen Rand (3) umfasst.

2. Pressdeckel nach Anspruch 1, **dadurch gekennzeichnet, dass** er aus Stahl, bevorzugt aus einem rostfreien Stahl, besteht.

3. Pressdeckel nach Anspruch 1 oder 2, **dadurch gekennzeichnet, dass** auf der, vom Rand (3) abgewandten Seite Lochblech (2) mindestens drei Haken (5) entlang eines Pressrings (7) oder nahe zu einer Längsachse angeordnet sind.

4. Pressdeckel nach einem der Ansprüche 1 bis 3, **dadurch gekennzeichnet, dass** das Lochblech (2) mit einer Lochung (4), bevorzugt in Form von zylindrischen, konischen oder gestuften Bohrungen (8) versehen ist, ausgenommen die Bereiche (6), in denen Haken (5) angeordnet sind.

5. Pressdeckel nach einem der Ansprüche 1 bis 4, **dadurch gekennzeichnet, dass** der Lochdurchmesser der einzelnen Löcher der Lochung (4) vorzugsweise 0,6-1,2mm beträgt und dass die Löcher in einem Abstand von 2-3mm voneinander angeordnet sind.

6. Pressdeckel nach einem der Ansprüche 1 bis 5, **dadurch gekennzeichnet, dass** das Lochblech (2) eine Höhe (h) des Randes (3) von 8-10mm aufweist.

7. Verwendung eines Pressdeckels (1, 10) nach einem der Ansprüche 1 bis 6 in einer Käseform (11), **dadurch gekennzeichnet, dass** die Käseform einen Boden (12) und Seitenwände (13) aufweist, wobei der Boden (12) und die Seitenwände (13) im Wesentlichen aus Lochblech (2) nach einem der Ansprüche 2, 4 oder 5 gebildet sind und dass die Käseform (11) rund bzw. zylindrisch oder mehreckig ist.

8. Verwendung eines Pressdeckels (1, 10) nach Anspruch 7, **dadurch gekennzeichnet, dass** mindestens zwei mehreckige, bevorzugt viereckige Käseformen (11) als eine Kassette (18) angeordnet sind, die Käseformen (11) mittels eines Deckblechs (17) und bodennah angeordneter Querrippen (16) verbunden sind und dass die Kassette (18) weiterhin Längsrippen (14) am Boden und/oder Mantelrippen (15) im Bereich der Seitenwände aufweist, die jeweils bevorzugt parallel zueinander angeordnet sind.

9. Verfahren zur Herstellung eines Pressdeckels (1) für eine Käseform (11), der aus Metall besteht und eine einwandige Lochplatte umfasst, **dadurch gekennzeichnet, dass** die Lochplatte in Form eines Lochbleches (2) mit einem umlaufenden, gebogenen Rand (3) durch Tiefziehen gefertigt wird, in das nachfolgend eine Vielzahl Lochungen (4) eingearbeitet wird.
